# EUROPÄISCHE PATENTSCHRIFT

(11) **EP 2 019 939 B1**
(45) Veröffentlichungstag und Bekanntmachung des Hinweises auf die Patenterteilung: **13.01.2010**
(21) Anmeldenummer: 07728495.8
(22) Anmeldetag: 25.04.2007
(51) Int. Cl.: F16H 37/04, F16H 61/70, F16H 61/04

(54) **MEHRGRUPPENGETRIEBE UND VERFAHREN ZUM GANGWECHSEL BEI EINEM MEHRGRUPPENGETRIEBE**
MULTI-GROUP TRANSMISSION AND METHOD FOR CHANGING GEAR IN A MULTI-GROUP TRANSMISSION
BOÎTE DE VITESSES À PLUSIEURS GROUPES ET PROCÉDÉ POUR CHANGER DE VITESSES AVEC UNE BOÎTE DE VITESSES À PLUSIEURS GROUPES

(30) Priorität: 24.05.2006 DE 102006024370
(43) Veröffentlichungstag der Anmeldung: 04.02.2009
(73) Patentinhaber: ZF Friedrichshafen AG, 88038 Friedrichshafen (DE)
(72) Erfinder: BORNTRÄGER, Kai, 88085 Langenargen (DE)
(86) Internationale Anmeldenummer: PCT/EP2007/054039
(87) Internationale Veröffentlichungsnummer: WO 2007/134943

(56) Entgegenhaltungen:
- DE-A1- 4 226 575
- DE-A1- 10 135 327
- DE-A1- 10 143 994
- DE-A1- 19 922 116

## Beschreibung

Die Erfindung betrifft ein Mehrgruppengetriebe und ein Verfahren zum Gangwechsel bei einem Mehrgruppengetriebe gemäß dem Oberbegriff des Patentanspruchs 1 bzw. des Patentanspruchs 9.

Mehrgruppengetriebe werden als Vielgang-Getriebe hauptsächlich in Nutzkraftfahrzeugen eingesetzt. In der Regel bestehen sie aus einem Splittergetriebe als Vorschalt- oder Eingangsgetriebe, einem Hauptgetriebe als Grundgetriebe und einem Bereichsgetriebe als Nachschaltgetriebe. Zunehmend werden diese Getriebe als automatisierte Schaltgetriebe, wie beispielsweise das von der Anmelderin bekannte Getriebesystem ASTRONIC, ausgebildet, die eine Gangzahl von typischerweise 8, 10, 12 oder 16 Gängen zur Verfügung stellen. Sie bieten einerseits gegenüber konventionellen Handschaltgetrieben mehr Bedienungskomfort, insbesondere eine einfachere und nahezu kraftfreie Bedienung, eine hohe Sicherheit gegen Schaltfehler sowie eine verlängerte Kupplungsstandzeit. Zudem bieten solche automatisierten Schaltgetriebe gegenüber Automatgetrieben eine besonders für Nutzkraftfahrzeugen wichtige feinere Gangabstufung sowie einen höheren Übertragungswirkungsgrad bei vergleichsweise geringeren Herstellkosten.

Ein prinzipieller Nachteil dieser automatisierten Schaltgetriebe gegenüber anderen Automatgetrieben ist jedoch, dass sie nicht unter Last schalten, sondern bei einem Gangwechsel zum Schalten der üblichen Schaltelemente (Schaltklauen, Synchronisier-Einrichtungen) einer Zugkraftunterbrechung unterliegen. Dies kann insbesondere bei schweren Lastkraftwagen je nach Fahrsituation die Fahrgeschwindigkeit des Fahrzeuges derart verzögern, dass nach Abschluss eines Schaltvorgangs gleich wieder eine Rückschaltung erfolgt. Im Extremfall kann es sogar beim Befahren von Steigungen mit starker Beladung zum Stillstand bzw. zum Erreichen eines Anfahrvorgangs kommen.

Aus der DE 101 43 994 A1 der Anmelderin ist ein Mehrgruppengetriebe nach dem Oberbegriff des Anspruchs 1 bzw. 9 mit einem Vorschaltgetriebe, einem Grundgetriebe und einem Bereichgetriebe bekannt, bei dem der Gangsprung in der Vorschaltgruppe größer ist als der Gangsprung im Grundgetriebe, wodurch die Vorschaltgruppe als Hauptgetriebe und die Grundgetriebegruppe als Splittergetriebe fungiert.

Das Mehrgruppengetriebe ist als Zahnräderwechselgetriebe in einer Vorgelegewellen-Bauweise ausgebildet. Es weist eine Eingangswelle auf, die der zweigängigen Vorschaltgruppe zugeordnet ist, und eine Hauptwelle, die dem nachgeordneten zwei-, drei-, oder viergängigen Grundgetriebe zugeordnet ist, wobei die drehbar gelagerten Zahnräder für die verschiedenen Gänge auf der Eingangswelle bzw. der Hauptwelle mit entsprechenden drehfesten Zahnrädern auf einer Vorgelegewelle kämmen. Die Zahnräder der Eingangswelle und der Hauptwelle sind über Schalteinrichtungen wiederum drehfest mit ihren Wellen (Eingangswelle/Hauptwelle) verbindbar.

Die Eingangswelle und die Hauptwelle dieses Mehrgruppengetriebes sind koaxial zueinander angeordnet, wobei auf der Hauptwelle ein Zahnrad angeordnet ist, das über eine Schalteinrichtung im Vorschaltgetriebe mit der Eingangswelle verbindbar ist, so dass eine Wirkverbindung zwischen dem Vorschaltgetriebe und dem Grundgetriebe herstellbar ist. Am axial gegenüber liegenden Ende der Hauptwelle ist das Bereichsgetriebe nachgeschaltet. Diese Getriebegruppe ist als ein Planetengetriebe ausgebildet, dass mit einer Abtriebswelle des Mehrgruppengetriebes verbunden ist und zwei weitere Übersetzungen bietet, so dass sich eine maximal mögliche Gangzahl aus der Multiplikation der Einzelgangzahlen der drei Getriebegruppen ergibt. Dabei kann der höchste Gang als ein Direktgang, also mit einem Übersetzungsverhältnis von 1 oder als ein Schnellgang mit einem Übersetzungsverhältnis kleiner 1 ausgebildet sein.

Durch dieses modulare Getriebesystem wird eine Realisierung verschiedener Getriebe mit unterschiedlicher Gangzahl und Drehmomenten bei einem relativ geringen Kosten- und Konstruktionsaufwand ermöglicht. Das Getriebesystem kann als Handschaltgetriebe oder als teilautomatisiertes Getriebe ausgebildet sein.

Nachteilig daran ist, dass das bekannte Mehrgruppengetriebe die von Schaltgetrieben bekannte Zugkraftunterbrechung aufweist, die insbesondere bei Nutzfahrzeugen zu den eingangs beschriebenen Problemen beim Gangwechsel und hohen Komforteinbußen im Fahrbetrieb führen kann.

Aus der DE 4226575 A1 ist des Weiteren ein Zahnrädenrvechselgetriebe mit einem zwei Eingangskonstanten aufweisenden Vorschaltgetriebe und einem zwei Zahnradstufen aufweisenden Grundgetriebe bekannt. Jeweils zwei Zahnradstufen in dem Vorschaltgetriebe und in dem Grundgetriebe ergeben vier Vorwärtsgänge. Zur Erreichung eines fünften Vorwärtsganges ist eine Schaltkupplung vorgesehen, durch die eine Eingangswelle des Vorschaltgetriebes mit einer koaxial dahinter angeordneten Ausgangswelle des Grundgetriebes verbunden werden kann, wodurch ein fünfter Vorwärtsgang mit einer 1:1 - Übersetzung schaltbar ist. Auch dieses Getriebe weist den oben beschriebenen Nachteil der Zugkraftunterbrechung bei Gangwechseln auf.

Weiterhin ist aus der DE 101 35 327 A1 ein automatisiertes Zahnräderwechselgetriebe in einer Eingruppenbauweise mit typischerweise 6 Gängen sowie ein Verfahren zum Gangwechsel bei einem solchen Getriebe bekannt, bei dem bei einem Schaltvorgang eine Anfahrkupplung zur Erhöhung der Drehzahl einer Eingangswelle mittels einer Antriebsmaschine nur bis zu einer Schlupfgrenze eingerückt wird. Bei einem Rückschaltvorgang wird die Eingangswelle über die Antriebsmaschine bis zum Erreichen einer Synchrondrehzahl für den Zielgang beschleunigt. Eine weitere Drehzahlerhöhung führt zu einem Durchrutschen der Kupplung, so dass sich die Drehzahlen von der Antriebsmaschine und der Eingangswelle angleichen, wenn die Kupplung genau an der Rutschgrenze betrieben wird. Dazu wird gleichzeitig mit dem Öffnen der Kupplung bei einem Schaltvorgang die Drehzahl der Antriebsmaschine über eine Steuerungseinrichtung in Richtung der Synchrondrehzahl des Zielganges eingeregelt und anschließend die Kupplung bis zur Schlupfgrenze wieder eingerückt, um die Eingangswelle entsprechend zu beschleunigen.

Das Betreiben der Kupplung an der Schlupfgrenze ermöglicht einen besseren Betriebskomfort, da Drehmomentspitzen, die von der Fahrbahn in den Antriebsstrang eingeleitet werden, sich nicht an der Antriebsmaschine abstützen, sondern zu einem Rutschen der Kupplung führen. Weiterhin ergeben sich durch das Betreiben der Kupplung an der Schlupfgrenze verkürzte Schaltzeiten, da die Synchrondrehzahl des jeweiligen Zielganges schneller erreicht wird und sich damit eine zeitliche Verkürzung der schaltungsbedingten Zugkraftunterbrechungen ergibt.

Bei einem Schaltvorgang, bei dem zwischen einem Ursprungsgang und einem Zielgang ein oder mehrere Gänge übersprungen werden, kann auch zunächst ein dazwischen liegender Gang geschaltet werden, wobei die Schlupfgrenze der Kupplung und die entsprechende Synchrondrehzahl dann an den dazwischen liegenden Gang angepasst werden.

Als nachteilig wird beurteilt, dass der Betrieb der Anfahrkupplung an der Schlupfgrenze bei häufigen Gangwechseln relativ verschleißintensiv ist. Die bekannte Methode ist auch nur zur Drehzahlerhöhung einer Eingangwelle bei Rückschaltvorgängen, also bei einem gewünschten Gangwechsel in einen niedrigeren Gang, vorgesehen. Dadurch kann zwar eine zeitliche Verkürzung der Zugkraftunterbrechung beim Zurückschalten erreicht werden, nicht jedoch beim Beschleunigen des Fahrzeuges und den damit verbundenen Hochschaltvorgängen. Zudem ist das bekannte Verfahren zum Gangwechsel bei Eingruppengetrieben nicht ohne weiteres für Mehrgruppengetriebe, die eine Eingangswelle und mindestens eine weitere Hauptwelle aufweisen, geeignet.

Vor diesem Hintergrund liegt der Erfindung die Aufgabe zugrunde, ein Mehrgruppengetriebe mit einem hohen Betriebskomfort zu schaffen, dass weitgehend zugkraftunterbrechungsfreie Gangwechsel, insbesondere bei einem Wechsel von einem niedrigeren in einen höheren Gang, ermöglicht.

Die Lösung dieser Aufgabe ergibt sich aus den Merkmalen der unabhängigen Patentansprüche, während vorteilhafte Ausgestaltungen und Weiterbildungen der Erfindung den zugeordneten Unteransprüchen entnehmbar sind.

Der Erfindung liegt die Erkenntnis zugrunde, dass bei einem Gangwechsel eines Mehrgruppen-Schaltgetriebes eine Drehzahlreduzierung des Antriebsmotors auf eine Zieldrehzahl ein Drehmoment freisetzt, dass mit Hilfe eines geeigneten Lastschaltmittels zur Antriebsmomenterhöhung des Fahrzeugs und zur Kompensation des Zugkrafteinbruchs während des Gangwechsels nutzbar ist.

Demnach geht die Erfindung aus von einem Mehrgruppengetriebe, insbesondere einem automatisierten Mehrgruppen-Schaltgetriebe für beispielsweise ein Nutzfahrzeug, mit wenigstens zwei hintereinander angeordneten mehrgängigen Getriebegruppen, über die eine Vielzahl von Gängen schaltbar sind, wobei einer ersten Getriebegruppe eine Getriebe-Eingangswelle zugeordnet ist, die über ein Anfahrelement mit einem Antriebsmotor des Fahrzeuges verbindbar ist, und wobei einer zweiten Getriebegruppe eine Getriebe-Hauptwelle zugeordnet ist. Zur Lösung der gestellten Aufgabe sieht die Erfindung zudem vor, dass Lastschaltmittel zur Herstellung einer zeitweiligen direkten Verbindung zwischen der Getriebe-Eingangswelle und der Getriebe-Hauptwelle vorgesehen sind, über die während eines Gangwechsels von einem Ursprungsgang in einen Zielgang ein Zwischengang schaltbar ist.

Die Bauweise eines Mehrgruppengetriebes mit einem Eingangsgetriebe und einem Hauptgetriebe ermöglicht es, eine Eingangswelle und eine Hauptwelle über das erfindungsgemäße Lastschaltmittel direkt zu verbinden, um die Drehzahl der Antriebmaschine über das Anfahrelement, also eine Anfahrkupplung, zu reduzieren und dabei das dynamische Moment des Antriebmotors zu nutzen, um, während die Schaltklauen und Synchronisierungen der beiden Getriebegruppen beim Gangwechsel in ihre Neutralstellung geschaltet sind, einen Zwischengang zu schalten.

Durch diese erfindungsgemäße Zwischengangschaltung wird vorteilhaft erreicht, dass dem Fahrzeug während eines vom Fahrer gewünschten und zulässigen Schaltvorgangs eine Zugkraftunterstützung zur Verfügung gestellt wird, die nach Abschluss des Schaltungsvorgangs eine Fahrt in dem gewünschten Zielgang ermöglicht, sowie insbesondere ein sofortiges Wiederzurückschalten aufgrund einer Geschwindigkeitsverzögerung durch einen Zugkrafteinbruch während des Gangwechsels zuverlässig vermeidet.

Außerdem kann vorgesehen sein, dass der Zwischengang als ein Direktgang ausgebildet ist. Als Zwischengang wird durch die Direktverbindung der Eingangswelle mit der Hauptwelle, bei alleiniger Betrachtung der Eingangsgruppe und der Hauptgruppe, wenn diese lastlos sind, automatisch der Direktgang geschaltet. Der Direktgang, also der Gang mit der Direktübersetzung 1:1, entspricht, wenn kein Schnellgang vorgesehen ist, dem höchsten Gang des Getriebes. Bei Mehrgruppengetrieben mit einer Nachschaltgruppe, beispielsweise einem zweigängigen Bereichsgetriebe, ist bei Schaltvorgängen im unteren Bereich grundsätzlich auch ein Zwischengang möglich, der nicht dem Direktgang des Gesamtgetriebes entspricht, sondern nur der höchste Gang ist, der sich aus dem Eingangsgetriebe und dem Hauptgetriebe ergibt. Besonders vorteilhaft ist es jedoch, auch bei Einbeziehung der Nachschaltgruppe, durch Schalten des oberen Bereichs des Bereichsgetriebes, stets den Direktgang als Zwischengang zu schalten, um eine möglicht effektive Drehzahlreduzierung der Antriebsmaschine über das Lastschaltmittel zu erreichen.

Als ein besonders effektives und einfaches Lastschaltmittel kann eine Lamellenkupplung vorgesehen sein. Diese ist im einfachsten Fall zwischen der ersten Getriebegruppe und der zweiten Getriebegruppe angeordnet. Es kann aber auch vorgesehen sein, dass das Lastschaltmittel bzw. die Lamellenkupplung zwischen dem Anfahrelement und der ersten Getriebegruppe angeordnet ist. Dies wird durch eine Hauptwelle ermöglicht, die axial durch das Eingangsgetriebe geführt und mit einem inneren Kuppelteil der Lamellenkupplung verbunden ist, so dass die Lamellenkupplung zwischen der Anfahrkupplung und dem Getriebeeingang angeordnet sowie über ein äußeres Kuppelteil mit der Eingangswelle und dem Eingangsgetriebe verbunden ist. Das axiale Vorziehen der Lamellenkupplung ermöglicht insbesondere bei einem zwei- oder dreigängigen Hauptgetriebe eine besonders kompakte Bauform.

Weiterhin kann vorgesehen sein, die erfindungsgemäße Zwischengangschaltung bei einem Mehrgruppengetriebe einzusetzen, bei dem die erste Getriebegruppe als ein zweigängiges Splitgetriebe ausgebildet ist, die zweite Getriebegruppe als ein zwei-, drei- oder viergängiges Hauptgetriebe ausgebildet ist, und der zweiten Getriebegruppe eine dritte als ein zweigängiges Bereichsgetriebe ausgebildete Getriebegruppe nachgeordnet ist. Dabei ist vorzugsweise eine elektrische und/oder hydraulische und/oder pneumatische Getriebesteuerung für eine automatisierte Schaltung wenigstens der Gänge einer der Getriebegruppen, vorzugsweise aller Gänge, vorgesehen.

Bei dieser, besonders in schweren Transportfahrzeugen verwendeten Getriebebauart, wirkt sich die Kompensation des Zugkrafteinbruchs beim Gangwechsel besonders vorteilhaft aus, da bei schweren Fahrzeugen Zugkrafteinbrüche, beispielsweise beim Befahren von Steigungen im zulässigen Grenzbereich, sich gravierend auswirken können. Insbesondere kann das Lastschaltmittel auch mit einem Mehrgruppengetriebe in einer besonders bauraum- und gewichtsparende Zwei-Vorgelegewellen - Bauweise, wie sie insbesondere für Lkw und Busse vorgesehen und beispielsweise in der in der DE 199 22 116 A1 beschrieben ist, kombiniert werden.

Eine weitere Aufgabe der Erfindung ist es, ein Verfahren zum Gangwechsel bei einem Mehrgruppengetriebe anzugeben, mit dem bei einem hohen Betriebskomfort weitgehend zugkraftunterbrechungsfreie Gangwechsel ermöglicht werden.

Die Lösung dieser Aufgabe ergibt sich aus den Merkmalen des Verfahrensanspruchs 9, während eine vorteilhafte Ausgestaltung dem Unteranspruch des Verfahrensanspruchs entnehmbar ist.

Weiterhin geht die Erfindung demnach aus von einem Verfahren zum Gangwechsel bei einem Mehrgruppengetriebe, insbesondere einem automatisierten Mehrgruppen-Schaltgetriebe beispielsweise für ein Nutzfahrzeug, mit wenigstens zwei hintereinander angeordneten mehrgängigen Getriebegruppen, über die eine Vielzahl von Gängen schaltbar sind, wobei einer ersten Getriebegruppe eine Getriebe-Eingangswelle zugeordnet ist, die über ein Anfahrelement mit einem Antriebsmotor des Fahrzeuges verbindbar ist, und wobei einer zweiten Getriebegruppe eine Getriebe-Hauptwelle zugeordnet ist. Die Erfindung sieht zur Lösung der gestellten Aufgabe zudem vor, dass während des Gangwechsels von einem Ursprungsgang in einen Zielgang mit Hilfe von Lastschaltmitteln eine direkte Verbindung zwischen der Getriebe-Eingangswelle und der Getriebe-Hauptwelle hergestellt wird, über die ein Zwischengang geschaltet wird.

Durch die Zwischengangschaltung können Zugkraftunterbrechungen beim Gangwechsel eines automatisierten Mehrgruppen-Schaltgetriebes vermieden oder zumindest erheblich reduziert werden. Zu Erzielung einer besonders effektiven Zugkraftunterstützung kann außerdem vorgesehen sein, dass bei der Zwischengangschaltung wenigstens folgende Schritte durchgeführt werden:
a) Schalten von Schaltelementen der ersten und der zweiten Getriebegruppe in eine Neutral-Stellung bei einsetzendem Schlupf des Anfahrelementes und Lastloswerden der Getriebegruppen zu Beginn des Ausrückvorgangs des Ursprungsganges,
b) Schließen der Direktverbindung zwischen der Getriebe-Eingangswelle und der Getriebe-Hauptwelle überschneidend mit dem vorhergehenden Schritt und Schalten des Zwischengangs mit folgender Angleichung der Drehzahlen des Antriebsmotors und der in Verbindung stehenden Getriebewellen bis zum Erreichen einer Drehzahl des Zielganges und
c) Schalten des Zielganges in den Getriebegruppen und überschneidendes Öffnen der Verbindung zwischen der Getriebe-Eingangswelle und der Getriebe-Hauptwelle.

Zu Beginn des Gangwechsels werden, sobald die Anfahrkupplung schlupfend das volle Motormoment überträgt, die Getriebegruppen, also das Eingangsgetriebe und das Hauptgetriebe lastlos sowie die Klauen und Synchronisierungen in Neutral geschaltet. Über das Lastschaltmittel wird der Zwischengang geschaltet und dabei die Motordrehzahl des Antriebsmotors gesenkt, bis das Eingangsgetriebe und das Hauptgetriebe mit den Drehzahlen des Zielgangs drehen. Das Hauptgetriebe und das Eingangsgetriebe werden dann in den neuen Gang (Zielgang) geschaltet und das Lastschaltmittel wird geöffnet, also die direkte Verbindung zwischen Eingangswelle und Hauptwelle wieder getrennt, wodurch der Zwischengang wieder ausgelegt und der Gangwechsel abgeschlossen wird.

Zur Verdeutlichung der Erfindung ist der Beschreibung eine Zeichnung mit zwei Ausführungsbeispielen beigefügt.
In dieser zeigt:
- Fig. 1: eine schematische Darstellung einer ersten Ausführungsform eines Mehrgruppengetriebes gemäß der Erfindung mit einer Zwischengangschaltung,
- Fig. 2a: eine Darstellung des Getriebes mit einem Drehmomentenfluss bei einem eingelegten Ursprungsgang,
- Fig. 2b: eine Darstellung des Getriebes mit einem Drehmomentenfluss bei einem Gangwechsel von dem Ursprungsgang in einen Zielgang beim Ausrücken des Ursprungsgangs und Schließen des Zwischengangs,
- Fig. 2c: eine Darstellung des Getriebes mit einem Drehmomentenfluss bei dem Gangwechsel beim Einrücken des Zielgangs und Öffnen des Zwischengangs,
- Fig. 2d: eine Darstellung des Getriebes mit einem Drehmomentenfluss bei eingelegtem Zielgang,
- Fig. 3: eine zweite Ausführungsform eines Mehrgruppengetriebes gemäß der Erfindung und
- Fig. 4: ein Drehzahl-/Drehmomentenverlaufs-Diagramm bei dem Gangwechsel von Fig. 2a bis Fig. 2d.

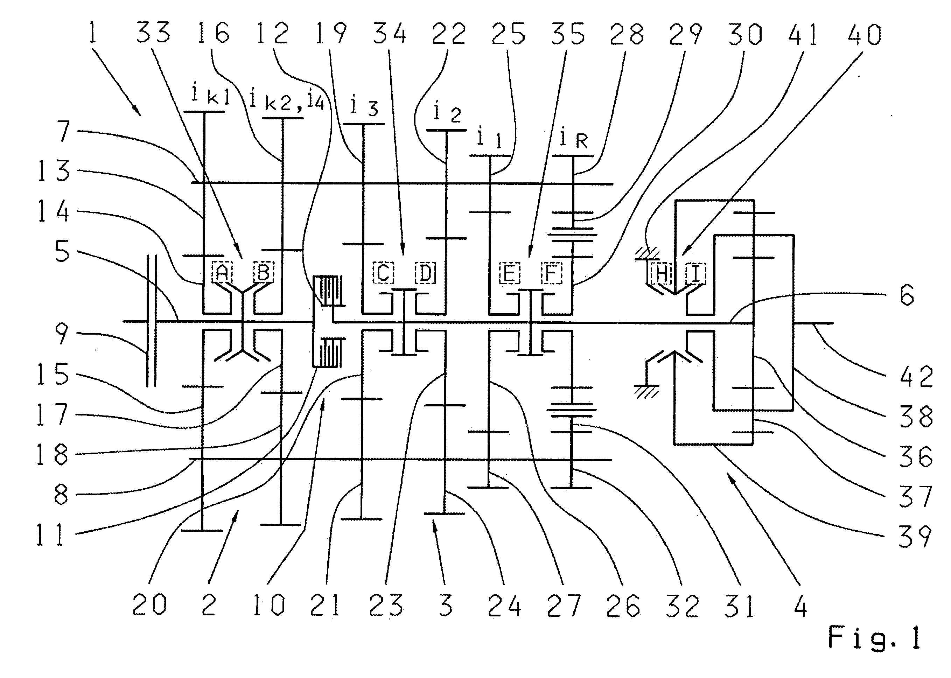

Demnach ist in Fig. 1 ein Mehrgruppengetriebe dargestellt, das als ein automatisiertes Zwei-Vorgelegewellen-Getriebe 1 eines Nutzkraftfahrzeuges mit drei Getriebegruppen 2, 3 und 4 ausgebildet ist. Zur Funktionsteuerung ist eine nicht dargestellte Getriebe-Steuereinrichtung vorhanden. Ein solches Getriebe und dessen Funktionsweise - ohne Zwischengangschaltung - ist dem Fachmann aus der Baureihe ZF-ASTRONIC der Anmelderin an sich bekannt. Das hier gezeigte Getriebe ist als eine 16-Gang-Version ausgebildet, wobei der 16. Gang als ein Direktgang ausgelegt ist.

Eingangsseitig ist auf einer Eingangswelle 5 des Getriebes 1 ein vorteilhaft als eine Motorkupplung ausgebildetes Anfahrelement 9 angeordnet. Über die Anfahrkupplung 9 ist eine (nicht dargestellte) Antriebsmaschine des Fahrzeuges mit dem Getriebe 1 verbindbar. Die Eingangswelle 5 führt in die erste Getriebegruppe 2, die als ein zweigängiges Splittergetriebe ausgebildet ist. Koaxial zu der Eingangswelle 5 ist eine Hauptwelle 6 angeordnet, die durch die zweite Getriebegruppe 3 geführt ist, welche als ein viergängiges Hauptgetriebe ausgebildet ist. Die Getriebewellen 5 und 6 sind zwischen zwei parallel angeordneten Vorgelegewellen 7 und 8 drehbar gelagert, wobei sich zur Realisierung der Übersetzungen (Gänge) jeweils zwei drehfeste Zahnräder auf der ersten und der zweiten Vorgelegewelle 7 und 8 mit einem zugehörigen Losrad auf der Eingangswelle 5 bzw. der Hauptwelle 6 im Eingriff befinden.

Das Splittergetriebe 2 weist eine erste Gangkonstante iₖ₁ aus einer ersten Zahnradkombination mit den Zahnrädern 13, 14, 15 und eine zweite Gangkonstante iₖ₂ aus einer zweiten Zahnradkombination mit den Zahnrädern 16, 17, 18 auf. Die Gangkonstanten iₖ₁ und iₖ₂ sind mit einer Schalteinrichtung 33 mit nicht explizit dargestellten Schalt- und Synchronisierelementen, über die das jeweilige Losrad 14 bzw. 17 drehfest mit der Eingangswelle 5 verbindbar ist, in zwei Stellungen A bzw. B umschaltbar.

Die Gangkonstante iₖ₂ fungiert gleichzeitig als ein vierter Gang i₄ des Hauptgetriebes 3. Das Hauptgetriebe 3 weist einen dritten Gang i₃ aus einer dritten Zahnradkombination mit den Zahnrädern 19, 20, 21 und einen zweiten Gang i₂ aus einer vierten Zahnradkombination mit den Zahnrädern 22, 23, 24 auf. Die Gänge i₂ und i₃ sind jeweils mit einer Schalteinrichtung 34 zwischen zwei Stellungen C bzw. D schaltbar.

Das Hauptgetriebe 3 weist weiterhin einen ersten Gang i₁ aus einer fünften Zahnradkombination mit den Zahnrädern 25, 26, 27 und einen Rückwärtsgang Gang i_{R} aus einer sechsten Zahnradkombination mit den Zahnrädern 28, 29, 30, 31, 32 auf. Die Gänge i₁ und i_{R} sind jeweils mit einer weiteren Schalteinrichtung 35 zwischen zwei Stellungen E und F schaltbar.

An dem von der Splittergruppe 2 abgewandten Ende der Hauptwelle 6 ist ein Bereichgruppengetriebe 4 antriebstechnisch nachgeordnet. Diese Nachschaltgruppe 4 ist als ein Planetengetriebe ausgebildet, mit einem zentralen Sonnenrad 36, das mit einem Planetenradsatz 37 kämmt, der auf einem Planetenträger 38 gelagert ist. Ein Hohlrad 39 des Gruppengetriebes 4 kämmt mit den Planetenrädern 37 und ist über eine Schalteinrichtung 40 mit zwei Schaltstellungen H bzw. I alternativ mit einem Gehäuse 41 oder mit einer Abtriebswelle 42 des Mehrgruppengetriebes 1 verbindbar.

Insgesamt sind somit durch eine Kombination der Schaltstellungen A, B, C, D, E, F, H und I insgesamt 2 x 4 x 2 = 16 Gänge darstellbar. Die Schaltfolge ergibt sich dadurch, dass zunächst alternierend die Gangkombinationen des Hauptgetriebes 3 und des Splittergetriebes 2 durchgeschaltet werden. Dann wird das Bereichsgetriebe zugeschaltet und die Kombinationsfolge bis zum Schalten des höchsten Ganges (Direktgang) wiederholt. Zusätzlich steht neben dem ersten Rückwärtsgang i_{R} des Hauptgetriebes 3, durch Zuschalten des Splittergetriebes 2 eine zweite Rückwärtsgang-Übersetzung zur Verfügung.

Zwischen der Eingangswelle 5 und der Hauptwelle 6 ist erfindungsgemäß ein vorteilhaft als eine Lamellenkupplung ausgebildetes Lastschaltmittel 10 angeordnet. Die Eingangswelle 5 ist an ihrem von der Anfahrkupplung 9 abgewandten Ende mit einem äußeren Kupplungsteil 11 der Lamellenkupplung 10 mit antreibenden Reibscheiben verbunden. Die Hauptwelle 6 ist an ihrem von der Abtriebswelle 42 abgewandten Ende mit einem inneren Kupplungsteil 12 mit zwischen den äußeren Reibscheiben laufenden angetriebenen Reibscheiben verbunden. Über eine axiale Verschiebung der Kupplungsteile 11 1 und 12 mittels der Getriebe-Steuereinrichtung ist eine reibschlüssige und somit drehfeste Verbindung zwischen der Eingangswelle 5 und der Hauptwelle 6 herstellbar.

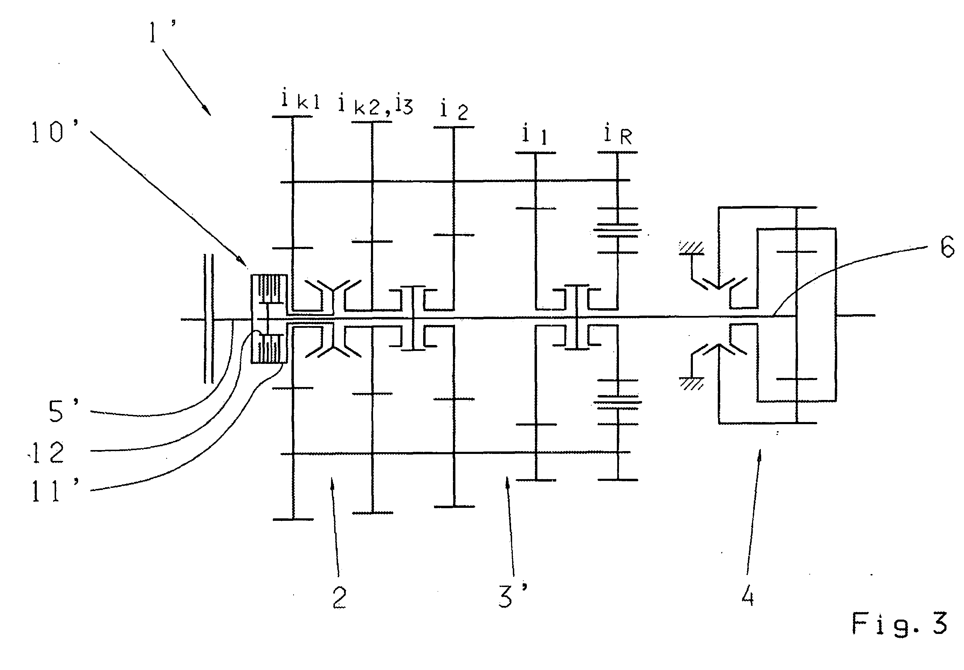

Die Fig. 3 zeigt eine weitere Ausführungsform mit einem Zwei-Vorgelegewellen-Getriebe 1', das als eine 12 Gang Variante ausgebildet ist, wobei der 10. Gang als Direktgang ausgelegt ist. Ein Hauptgetriebe 3' ist hierbei als eine dreigängige Gruppe realisiert. Der Aufbau ist ansonsten analog zu der 16-gängigen Variante. Daher kann hier auf eine detaillierte Beschreibung der einzelnen Bauteile verzichtet und nur auf eine erfindungsgemäße Anordnung einer Lamellenkupplung 10' eingegangen werden. Diese ist eingangsseitig vor das Getriebe 1' vorgezogen, wobei eine Hauptwelle 6' durch das Splittergetriebe 2 geführt und mit dem inneren Kupplungsteil 12 verbunden ist. Ein äußeres Kupplungsteil 11' verbindet andererseits eine Eingangswelle 5' mit dem Splittergetriebe 2. Durch das axiale Vorziehen der Lamellenkupplung 10' wird bei der dreigängigen Variante des Hauptgetriebes 3' kein zusätzlicher Bauraum zwischen dem Hauptgetriebe 3' und dem Splittergetriebe 2 benötigt.

Ein Verfahren zum Gangwechsel bei einem Mehrgruppengetriebe beruht im Wesentlichen darauf, dass während des Gangwechsels von einem Ursprungsgang in einen Zielgang über eine Direktverbindung zwischen einer Getriebe-Eingangswelle 5, 5' und einer Getriebe-Hauptwelle 6, 6' ein Zwischengang geschaltet wird.

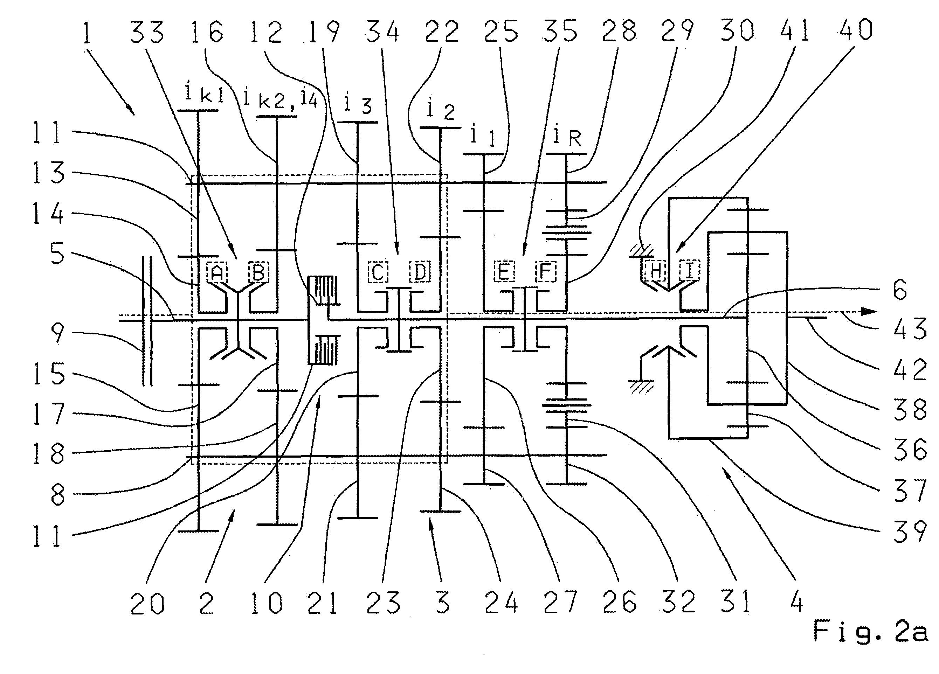

Die Fig. 2a bis 2d zeigen verschiedene Phasen während des Gangwechsels bei dem oben beschriebenen automatisiertes Zwei-Vorgelegewellen-Getriebe 1 vom 11. Gang in den 13. Gang, wobei der 16. Gang als Direktgang zwischen geschaltet wird.

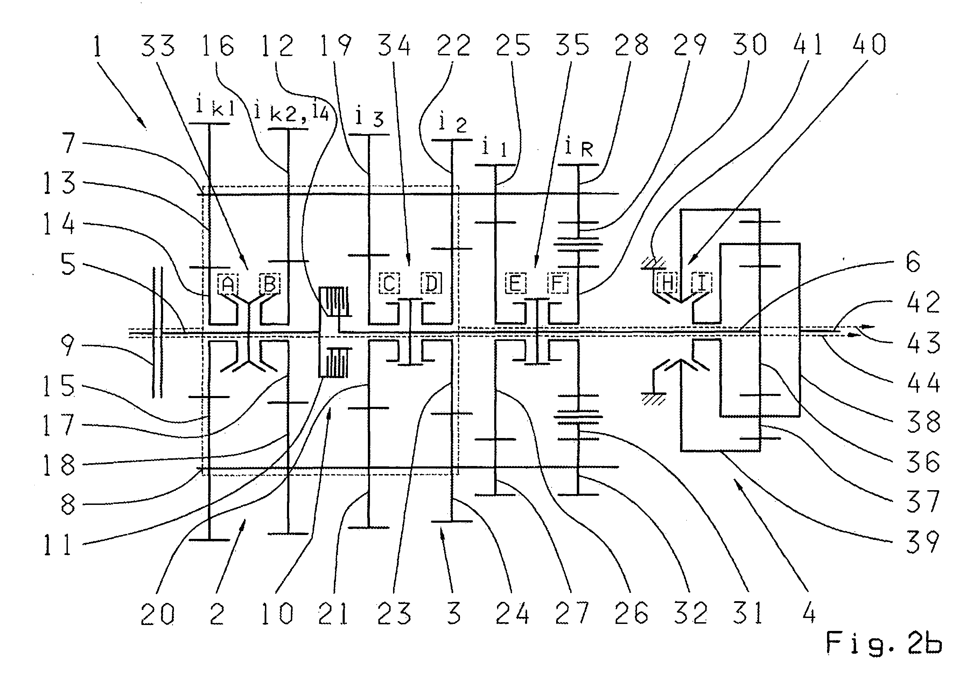

In der Fig. 2a ist ein Momentenfluss 43 bei eingelegtem 11. Gang mit einer gestrichelten Linie angedeutet. Dabei ist die Gangkonstante iₖ₁ geschaltet, das Hauptgetriebe 3 ist in den 2. Gang i₂ geschaltet und das Bereichsgetriebe 4 befindet sich im oberen Gangbereich. In Fig. 2b wird der 11. Gang ausgerückt, wobei das Splittergetriebe 2 und das Hauptgetriebe 3 lastlos werden. Die entsprechenden Klauen und Synchronisierungen werden in Neutral geschaltet. Der Direktgang wird geschaltet, so dass ein direkter Momentenfluss 44 erzeugt wird (gestrichelte Linie ausschließlich parallel zur Eingangswelle 5 und zur Hauptwelle 6).

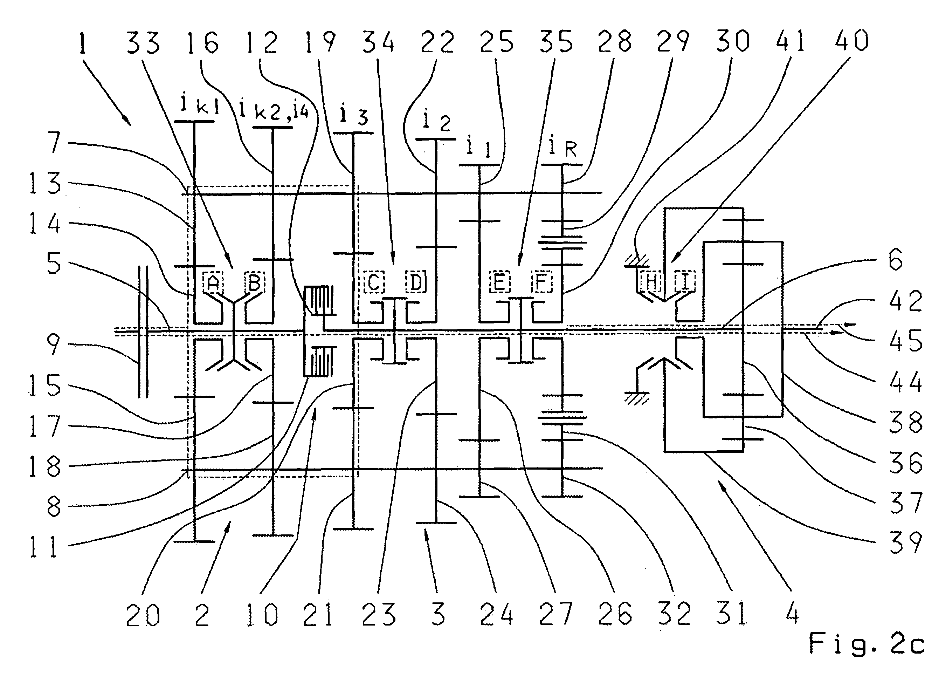

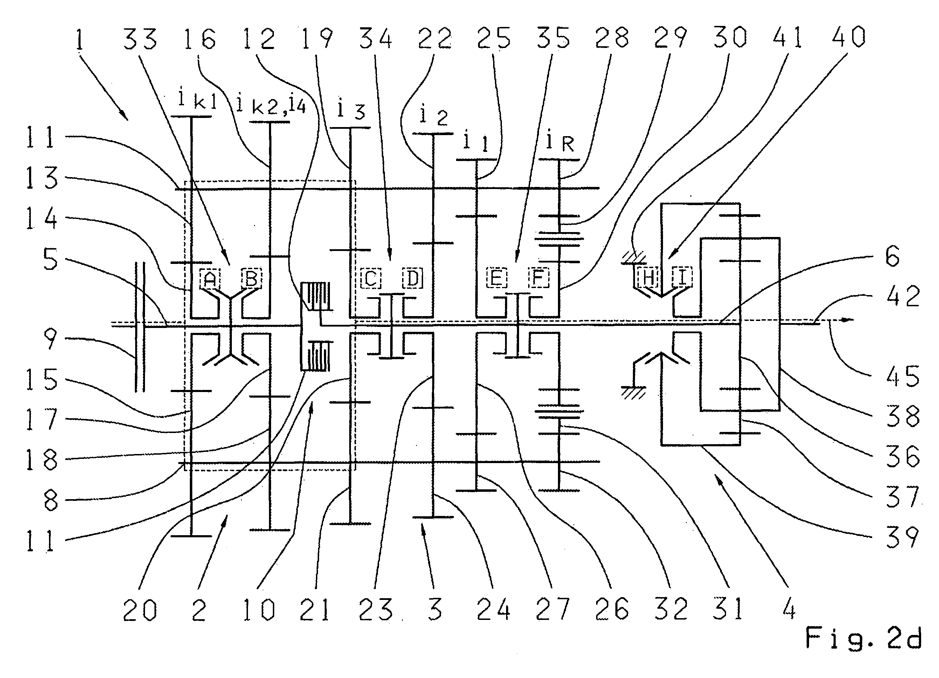

In der folgenden Fig. 2c wird der Direktgang bzw. die Lamellenkupplung 10 ausgerückt, also die Direktverbindung zwischen der Eingangswelle 5 und der Hauptwelle 6 getrennt, das Splittergetriebe 2 wird (wieder) in die Gangkonstante iₖ₁ geschaltet, das Hauptgetriebe 3 wird nun in den 3. Gang i₃ geschaltet und das Bereichsgetriebe 4 befindet sich weiterhin im oberen Gangbereich. Der 13. Gang ist eingerückt. Der Schaltvorgang ist in Fig. 2d abgeschlossen, wobei sich im 13. Gang ein Momentenfluss 45 ergibt.

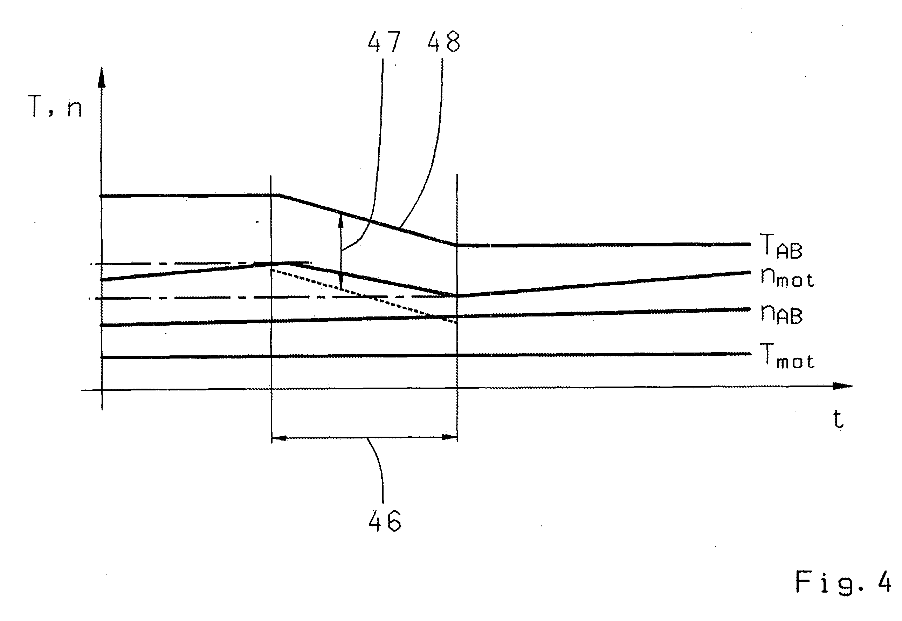

Die Fig. 4 zeigt schließlich ein Diagramm, in dem der Drehzahl- und Drehmomentenverlauf während des oben beschriebenen Gangwechsels verdeutlicht ist.

Darin ist ein Zeitraum 46 dargestellt, innerhalb dessen der Gangwechsel erfolgt. Während der Schaltung in den Direktgang zieht die Lamellenkupplung 10 die Drehzahl des Antriebsmotors nₘₒₜ des Fahrzeuges auf eine Anschlussdrehzahl des Zielgangs, beispielsweise von 1900 1/min auf 1319 1/min. Ein Motormoment Tₘₒₜ bleibt bei dem Schaltvorgang gleich, hingegen steigt eine Abtriebsdrehzahl n_{AB} des Getriebes 1 leicht an. Ein bei einem Abtriebs-Momentenverlauf T_{AB}, während des Schaltvorgangs frei werdendes entsprechendes dynamisches Moment 48, wird dabei als ein Potenzial 47 des Direktgangs genutzt, um die Zugkraft des Fahrzeugs während des Gangwechsels zu unterstützen.

### Bezugszeichen

- 1, 1': Zwei-Vorgelegewellen-Getriebe
- 2: erste Getriebegruppe/Eingangs-Splittergetriebe
- 3, 3': zweite Getriebegruppe/Hauptgetriebe
- 4: dritte Getriebegruppe/Bereichsgetriebe
- 5, 5': Eingangswelle
- 6, 6': Hauptwelle
- 7: Vorgelegewelle
- 8: Vorgelegewelle
- 9: Anfahrelement/Motorkupplung
- 10, 10': LastschaltmitteULamellenkupplung
- 11, 11': äußeres Kupplungsteil
- 12: inneres Kupplungsteil
- 13: Zahnrad iₖ₁
- 14: Zahnrad iₖ₁
- 15: Zahnrad iₖ₁
- 16: Zahnrad iₖ₂. i₄
- 17: Zahnrad iₖ₂, i₄
- 18: Zahnrad iₖ₂ i₄
- 19: Zahnrad i₃
- 20: Zahnrad i₃
- 21: Zahnrad i₃
- 22: Zahnrad i₂
- 23: Zahnrad i₂
- 24: Zahnrad i₂
- 25: Zahnrad i₁
- 26: Zahnrad i₁
- 27: Zahnrad i₁
- 28: Zahnrad i_{R}
- 29: Zahnrad i_{R}
- 30: Zahnrad i_{R}
- 31: Zahnrad i_{R}
- 32: Zahnrad i_{R}
- 33: Schalteinrichtung
- 34: Schalteinrichtung
- 35: Schalteinrichtung
- 36: Sonnenrad
- 37: Planetenradsatz
- 38: Planetenträger
- 39: Hohlrad
- 40: Schalteinrichtung
- 41: Gehäuse
- 42: Abtriebswelle
- 43: Kraftfluss
- 44: Kraftfluss
- 45: Kraftfluss
- 46: Gangwechsel-Zeitraum
- 47: Direktgang-Potenzial
- 48: dynamisches Moment

- iₖ₁: Splittergetriebe-Gangkonstante
- iₖ₂: Splittergetriebe-Gangkonstante
- i₁: Hauptgetriebe-Gang
- i₂: Hauptgetriebe-Gang
- i₃: Hauptgetriebe-Gang
- i₄: Hauptgetriebe-Gang
- i_{R}: Hauptgetriebe-Rückwärtsgang

- A: Schaltstellung Splittergetriebe
- B: Schaltstellung Splittergetriebe
- C: Schaltstellung Hauptgetriebe
- D: Schaltstellung Hauptgetriebe
- E: Schaltstellung Hauptgetriebe
- F: Schaltstellung Hauptgetriebe
- H: Schaltstellung Bereichsgetriebe
- I: Schaltstellung Bereichsgetriebe

- T_{AB}: Abtriebsmoment
- Tₘₒₜ: Motormoment
- n_{AB}: Abtriebsdrehzahl
- nₘₒₜ: Motordrehzahl

## Patentansprüche

1. Mehrgruppengetriebe, insbesondere automatisiertes Mehrgruppen-Schaltgetriebe für beispielsweise ein Nutzfahrzeug, mit wenigstens zwei hinter einander angeordneten mehrgängigen Getriebegruppen (2, 3, 3'), über die eine Vielzahl von Gängen schaltbar sind, wobei einer ersten Getriebegruppe (2) eine Getriebe-Eingangswelle (5, 5') zugeordnet ist, die über ein Anfahrelement (9) mit einem Antriebsmotor des Fahrzeuges verbindbar ist, und wobei einer zweiten Getriebegruppe (3, 3') eine Getriebe-Hauptwelle (6, 6') zugeordnet ist, **dadurch gekennzeichnet , dass** Lastschaltmittel (10, 10') zur Herstellung einer zeitweiligen direkten Verbindung zwischen der Getriebe-Eingangswelle (5, 5') und der Getriebe-Hauptwelle (6, 6') vorgesehen sind, über die während eines Gangwechsels von einem Ursprungsgang in einen Zielgang ein Zwischengang schaltbar ist.

2. Mehrgruppengetriebe nach Anspruch 1, **dadurch gekennzeichnet, dass** der Zwischengang als ein Direktgang ausgebildet ist.

3. Mehrgruppengetriebe nach Anspruch 1 oder 2, **dadurch gekennzeichnet, dass** das Lastschaltmittel (10, 10') als eine Lamellenkupplung ausgebildet ist.

4. Mehrgruppengetriebe nach zumindest einem der Ansprüche 1 bis 3, **dadurch gekennzeichnet , dass** das Lastschaltmittel (10) in axialer Richtung zwischen der ersten Getriebegruppe (2) und der zweiten Getriebegruppe (3) angeordnet ist.

5. Mehrgruppengetriebe nach zumindest einem der Ansprüche 1 bis 3, **dadurch gekennzeichnet , dass** das Lastschaltmittel (10') in axialer Richtung zwischen dem Anfahrelement (9) und der ersten Getriebegruppe (2) angeordnet ist.

6. Mehrgruppengetriebe nach zumindest einem der Ansprüche 1 bis 5, **dadurch gekennzeichnet , dass** die erste Getriebegruppe (2) als ein zweigängiges Splitgetriebe ausgebildet ist, dass die zweite Getriebegruppe (3, 3') als ein zwei-, drei- oder viergängiges Hauptgetriebe ausgebildet ist, und dass der zweiten Getriebegruppe (3, 3') eine dritte als ein zweigängiges Bereichsgetriebe ausgebildete Getriebegruppe (4) nachordnet ist.

7. Mehrgruppengetriebe nach zumindest einem der Ansprüche 1 bis 6, **dadurch gekennzeichnet , dass** eine elektrische und/oder hydraulische und/oder pneumatische Getriebe-Steuereinrichtung für eine automatisierte Schaltung wenigstens der Gänge einer der Getriebegruppen (2, 3, 3', 4) vorgesehen ist.

8. Mehrgruppengetriebe nach zumindest einem der Ansprüche 1 bis 7, **dadurch gekennzeichnet , dass** die Getriebegruppen (2, 3, 3') in einer Zwei-Vorgelegewellen-Bauweise ausgebildet sind.

9. Verfahren zum Gangwechsel bei einem Mehrgruppengetriebe, insbesondere einem automatisierten Mehrgruppen-Schaltgetriebe für beispielsweise ein Nutzfahrzeug, mit wenigstens zwei hintereinander angeordneten mehrgängigen Getriebegruppen (2, 3, 3'), über die eine Vielzahl von Gängen schaltbar sind, wobei einer ersten Getriebegruppe (2) eine Getriebe-Eingangswelle (5, 5') zugeordnet ist, die über ein Anfahrelement (9) mit einem Antriebsmotor des Fahrzeuges verbindbar ist, und wobei einer zweiten Getriebegruppe (3, 3') eine Getriebe-Hauptwelle (6, 6') zugeordnet ist, **dadurch gekennzeichnet, dass** während des Gangwechsels von einem Ursprungsgang in einen Zielgang mit Hilfe von Lastschaltmitteln (10, 10') eine direkte Verbindung zwischen der Getriebe-Eingangswelle (5, 5') und der Getriebe-Hauptwelle (6, 6') hergestellt wird, über die ein Zwischengang geschaltet wird.

10. Verfahren nach Anspruch 9, **dadurch gekennzeichnet , dass** bei der Zwischengangschaltung wenigstens folgende Schritte durchgeführt werden:
a) Schalten von Schaltelementen der ersten und der zweiten Getriebegruppe (2, 3, 3') in eine Neutral-Stellung bei einsetzendem Schlupf des Anfahrelementes (9) und Lastloswerden der Getriebegruppen (2, 3, 3') zu Beginn des Ausrückvorgangs des Ursprungsganges,
b) Schließen der Direktverbindung zwischen der Getriebe-Eingangswelle (5, 5') und der Getriebe-Hauptwelle (6, 6') überschneidend mit dem vorhergehenden Schritt und Schalten des Zwischengangs mit folgender Angleichung der Drehzahlen des Antriebsmotors und der in Verbindung stehenden Getriebewellen (5, 5', 6, 6') bis zum Erreichen einer Drehzahl des Zielganges und
c) Schalten des Zielganges in den Getriebegruppen (2, 3, 3') und über schneidendes Öffnen der Verbindung zwischen der Getriebe-Eingangswelle (5, 5') und der Getriebe-Hauptwelle (6, 6').

## Claims

1. Multi-group transmission, in particular automated multi-group change-speed transmission for, for example, a commercial vehicle, having at least two multiple-gear transmission groups (2, 3, 3') which are arranged behind one another and via which a multiplicity of gears can be shifted, a first transmission group (2) being assigned a transmission input shaft (5, 5') which can be connected via a start-up element (9) to a drive engine of the vehicle, and a second transmission group (3, 3') being assigned a transmission main shaft (6, 6'), **characterized in that** power-shift means (10, 10') are provided for producing a temporary direct connection between the transmission input shaft (5, 5') and the transmission main shaft (6, 6'), via which power-shift means (10, 10') an intermediate gear can be shifted during a gear change from an original gear into a target gear.

2. Multi-group transmission according to Claim 1, **characterized in that** the intermediate gear is configured as a direct gear.

3. Multi-group transmission according to Claim 1 or 2, **characterized in that** the power-shift means (10, 10') is configured as a multiple disc clutch.

4. Multi-group transmission according to at least one of Claims 1 to 3, **characterized in that** the power-shift means (10) is arranged in the axial direction between the first transmission group (2) and the second transmission group (3).

5. Multi-group transmission according to at least one of Claims 1 to 3, **characterized in that** the power-shift means (10') is arranged in the axial direction between the start-up element (9) and the first transmission group (2).

6. Multi-group transmission according to at least one of Claims 1 to 5, **characterized in that** the first transmission group (2) is configured as a two-gear split transmission, **in that** the second transmission group (3, 3') is configured as a two-gear, three-gear or four-gear main transmission, and **in that** a third transmission group (4) which is configured as a two-gear range transmission is arranged behind the second transmission group (3, 3').

7. Multi-group transmission according to at least one of Claims 1 to 6, **characterized in that** an electric and/or hydraulic and/or pneumatic transmission control device is provided for automated shifting at least of the gears of one of the transmission groups (2, 3, 3', 4) .

8. Multi-group transmission according to at least one of Claims 1 to 7, **characterized in that** the transmission groups (2, 3, 3') are configured in a double idler-shaft design.

9. Method for changing gear in a multi-group transmission, in particular an automated multi-group change-speed transmission for, for example, a commercial vehicle, having at least two multiple-gear transmission groups (2, 3, 3') which are arranged behind one another and via which a multiplicity of gears can be shifted, a first transmission group (2) being assigned a transmission input shaft (5, 5') which can be connected via a start-up element (9) to a drive engine of the vehicle, and a second transmission group (3, 3') being assigned a transmission main shaft (6, 6'), **characterized in that** a direct connection between the transmission input shaft (5, 5') and the transmission main shaft (6, 6') is produced with the aid of power-shift means (10, 10') during the gear change from an original gear into a target gear, via which direct connection an intermediate gear is shifted.

10. Method according to Claim 9, **characterized in that** at least the following steps are carried out during the intermediate-gear selection:
a) shifting of selector elements of the first and second transmission groups (2, 3, 3') into a neutral position when slip of the start-up element (9) starts and the transmission groups (2, 3, 3') lose their load at the beginning of the disengagement operation of the original gear,
b) closing of the direct connection between the transmission input shaft (5, 5') and the transmission main shaft (6, 6') in an overlapping manner with the preceding step, and selection of the intermediate gear with following matching of the speeds of the drive engine and of the transmission shafts (5, 5', 6, 6') which are connected, until a speed of the target gear is reached, and
c) selection of the target gear in the transmission groups (2, 3, 3') and overlapping opening of the connection between the transmission input shaft (5, 5') and the transmission main shaft (6, 6').

## Revendications

1. Boîte de vitesses à plusieurs groupes, notamment boîte de vitesses à plusieurs groupes automatisée pour un véhicule utilitaire par exemple, avec au moins deux groupes d'entraînement (2, 3, 3') à plusieurs rapports disposés l'un derrière l'autre, via lesquels une pluralité de rapports peuvent être enclenchés, un premier groupe d'entraînement (2) étant associé à un arbre d'entrée de boîte de vitesses (5, 5') pouvant être relié à un moteur d'entraînement du véhicule via un élément de démarrage (9) et un deuxième groupe d'entraînement (3, 3') étant associé à un arbre principal de boîte de vitesses (6, 6'), **caractérisée en ce que** des moyens de passage de vitesse en charge ( 10, 10') sont prévus pour établir une liaison directe à double sens entre l'arbre d'entrée de boîte de vitesses (5, 5') et l'arbre principal de boîte de vitesses (6, 6'), via lesquels un rapport intermédiaire peut être enclenché pendant un changement de vitesse d'un rapport source dans un rapport cible.

2. Boîte de vitesses à plusieurs groupes selon la revendication 1, **caractérisée en ce que** le rapport intermédiaire prend la forme d'un rapport direct.

3. Boîte de vitesses à plusieurs groupes selon la revendication 1 ou 2, **caractérisée en ce que** le moyen de passage de vitesse en charge (10, 10') prend la forme d'un embrayage à lamelles.

4. Boîte de vitesses à plusieurs groupes selon au moins l'une quelconque des revendications 1 à 3, **caractérisée en ce que** le moyen de passage de vitesse en charge (10) est disposé entre le premier groupe d'entraînement (2) et le deuxième groupe d'entraînement (3) dans la direction axiale.

5. Boîte de vitesses à plusieurs groupes selon au moins l'une quelconque des revendications 1 à 3, **caractérisée en ce que** le moyen de passage de vitesse en charge (10') est disposé entre l'élément de démarrage (9) et le premier groupe d'entraînement (2) dans la direction axiale.

6. Boîte de vitesses à plusieurs groupes selon au moins l'une quelconque des revendications 1 à 5, **caractérisée en ce que** le premier groupe d'entraînement (2) prend la forme d'une boîte de vitesses à deux vitesses, que le deuxième groupe d'entraînement (3, 3') prend la forme d'une boîte de vitesses principale à deux, trois ou quatre rapports et que le deuxième groupe d'entraînement (3, 3') est disposé en aval d'un troisième groupe d'entraînement (4) prenant la forme d'une boite de vitesses à zones à deux rapports.

7. Boîte de vitesses à plusieurs groupes selon au moins l'une quelconque des revendications 1 à 6, **caractérisée en ce qu'**un dispositif de commande de boîte de vitesses électrique et/ou hydraulique et/ou pneumatique est prévu pour un changement de vitesse automatisé des rapports au moins d'un des groupes d'entraînement (2, 3, 3', 4).

8. Boîte de vitesses à plusieurs groupes selon au moins l'une quelconque des revendications 1 à 7, **caractérisée en ce que** les groupes d'entraînement (2, 3, 3') sont réalisés à la façon de deux arbres de présélection.

9. Procédé pour changer de vitesse dans une boîte de vitesses à plusieurs groupes, notamment dans une boîte de vitesses à plusieurs groupes automatisée pour, par exemple, un véhicule utilitaire, avec au moins deux groupes d'entraînement (2, 3, 3') à plusieurs rapports disposés les uns derrière les autres, via lesquels une pluralité de rapports peuvent être enclenchés, un premier groupe d'entraînement (2) étant associé à un arbre d'entrée de boîte de vitesses (5, 5') pouvant être relié à un moteur d'entraînement du véhicule via un élément de démarrage (9) et un deuxième groupe d'entraînement (3, 3') étant associé à un arbre principal de boîte de vitesses (6, 6'), **caractérisé en ce que** pendant le changement de vitesse d'un rapport source dans un rapport cible à l'aide de moyens de passage de vitesse en charge (10, 10'), une liaison directe est établie entre l'arbre d'entrée de boîte de vitesses (5, 5') et l'arbre principal de boîte de vitesses (6, 6'), via laquelle un rapport intermédiaire est enclenché.

10. Procédé selon la revendication 9, **caractérisé en ce que** dans le changement de vitesse du rapport intermédiaire, au moins les étapes suivantes sont réalisées :
a) enclenchement d'éléments de changement de vitesse du premier et du deuxième groupe d'entraînement (2, 3, 3') dans une position neutre lors du glissement par insertion de l'élément de démarrage (9) et du déchargement des groupes d'entraînement (2, 3, 3') au début du processus de retrait du rapport source ;
b) fermeture de la liaison directe entre l'arbre d'entrée de boîte de vitesses (5, 5') et l'arbre principal de boîte de vitesses (6, 6') coïncidant avec l'étape précédente et l'enclenchement du rapport intermédiaire avec l'ajustement consécutif des régimes du moteur d'entraînement et des arbres correspondants (5, 5', 6, 6') de la boîte de vitesses jusqu'à atteindre le régime du rapport cible ;
c) enclenchement du rapport cible dans les groupes d'entraînement (2, 3, 3') et ouverture simultanée de la liaison existant entre l'arbre d'entrée de boîte de vitesses (5, 5') et l'arbre principal de boîte de vitesses (6, 6').
